(19) Europäisches Patentamt
European Patent Office
Office européen des brevets

(11) **EP 2 009 072 B1**

(12) **EUROPEAN PATENT SPECIFICATION**

(45) Date of publication and mention
of the grant of the patent:
**17.08.2016 Bulletin 2016/33**

(51) Int Cl.:
***C09D 133/00*** *(2006.01)*  ***C09D 191/00*** *(2006.01)*
***C09D 201/06*** *(2006.01)*

(21) Application number: **08252050.3**

(22) Date of filing: **13.06.2008**

(54) **Aqueous polymeric composition**

Wässrige Polymerzusammensetzung

Composition polymérique aqueuse

(84) Designated Contracting States:
**DE FR GB TR**

(30) Priority: **29.06.2007 EP 07290825**

(43) Date of publication of application:
**31.12.2008 Bulletin 2009/01**

(73) Proprietor: **Rohm and Haas Company**
**Philadelphia, PA 19106-2399 (US)**

(72) Inventors:
• **Koller, Anne Denise**
 **06530 Peymeinade (FR)**
• **Lauer, Rosemarie Palmer**
 **Chalfont**
 **Pennsylvania 18914 (US)**

• **Blankenship, Robert Mitchell**
 **Harleysville**
 **Pennsylvania 19438 (US)**
• **Devonport, Wayne**
 **Doylestown**
 **Pennsylvania 18901 (US)**

(74) Representative: **Hoggins, Mark Andrew et al**
**Patent Outsourcing Limited**
**1 King Street**
**Bakewell Derbyshire DE45 1DZ (GB)**

(56) References cited:
**EP-A- 1 447 432      EP-A1- 0 599 478**
**WO-A-03/051990      US-A- 5 484 849**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a method for improving the repaintability of an aqueous coating during drying. More particularly, the method comprises forming an aqueous coating composition comprising a pigment and an aqueous polymeric composition including an emulsion polymer including, as copolymerized units, from 5% to 20%, by weight based on the weight of the polymer, carbonyl-functional ethylenically-unsaturated monomer, and an autoxidizable material having less than 10%, by weight based on the weight of fatty acid residues therein, tri-unsaturated fatty acid residues; wherein the autoxidizable material is from 10% to 20% of the total weight of the polymer and the autoxidizable material; and wherein the polymeric composition is free from copolymerized-carbonyl-functional-monomer-reactive amine and hydrazine functional groups.

The present invention serves to provide an aqueous polymeric composition that is particularly suitable for use in decorative and protective coatings for various substrates which coatings provide a sought-after balance of coatings properties, particularly including desirable application properties such as, for example, open time, flow, reflow, re-brushing, and repaint properties, and hardness development while maintaining desirable dry coatings properties, particularly including little or no yellowing.

WO-A-03/051990 discloses a composition comprising a polymer, wherein the polymer comprises at least one of a blend of a first polymer comprising a reaction product of acetacetoxyethyl acrylate AAEM monomer and a second polymer comprising a reaction product of castor oil (meth) acrylate monomer or a third polymer comprising a reaction product of AAEM and castor oil (meth) acrylate monomer.

US-A-5 484 849 discloses an air curing polymer composition which contains acetoacetate funcitonal polymer and an auto oxidisable material, the composition curing on exposure to oxygen.

EP-A-599 478 discloses a coating or impregnating compositon containing an aqueous dispersion of a minor addition polymer and a reactive coalescent, wherein the reactive coalescent contains at least one acetoacetate grouping.

U.S. Patent No. 5,484,849 discloses an air curing polymer composition which contains acetoacetate functional polymer and an autoxidizable material. However, the problem faced by the inventors is the provision of an aqueous polymeric composition suitable for use in aqueous coatings which provide a high level of application properties and still yield dried coatings that maintain a desirable balance of coatings properties. Improvements in the application properties and dry coatings properties have been found to accrue with a select range of compositions wherein the autoxidizable material is from 8% to 35% of the total weight of the emulsion polymer and the autoxidizable material, further including only autoxidizable material having less than 10%, by weight based on the weight of fatty acid residues, tri-unsaturated fatty acid residues and ensuring that the aqueous polymeric composition and the aqueous coating composition is free from copolymerized-carbonyl-functional-monomer-reactive amine and hydrazine functional groups, elements associated with yellowing in polymeric coatings.

The present invention is as set out in the accompanying claims.

The present invention utilizes an aqueous polymeric composition comprising an emulsion polymer comprising, as copolymerized units, from 5% to 20%, by weight based on the weight of said polymer, carbonyl-functional ethylenically-unsaturated monomer, and an autoxidizable material having less than 10%, by weight based on the weight of fatty acid residues therein, tri-unsaturated fatty acid residues; wherein said autoxidizable substance is from 10% to 20% of the total weight of said polymer and said autoxidizable material; and wherein said polymeric composition is free from copolymerized carbonyl-functional-monomer-reactive amine and hydrazine functional groups.

In particular, the present invention comprises forming an aqueous coating composition comprising a pigment and the aqueous polymeric composition.

Specifically, the present invention provides a method for improving the repaintability of an aqueous coating during drying comprising (a) forming the aqueous coating composition; (b) applying said aqueous coating composition to a substrate; and (c) applying additional said aqueous coating composition to said applied aqueous coating composition during drying.

The aqueous polymeric composition includes an emulsion polymer including, as copolymerized units, from 5% to 20%, by weight based on the weight of the dry polymer, carbonyl-functional ethylenically-unsaturated monomer. Carbonyl-functional ethylenically-unsaturated monomers include, for example, (meth)acrolein, diacetone(meth)acrylamide, acetoacetoxyethyl (meth)acrylate, allyl acetoacetate, vinyl acetoacetate, vinyl acetoacetamide, acetoacetoxyethyl (meth)acrylamide, cyanoacetoxyethyl (meth)acrylate, cyanoacetoxypropyl (meth)acrylate, allyl cyanoacetate, and vinyl cyanoacetate and combinations thereof. Preferred carbonyl functional monomers include acetoacetoxyethyl (meth)acrylate, acetoacetoxypropyl (meth)acrylate, allyl acetoacetate, acetoacetoxybutyl (meth)acrylate, 2,3-di(acetoacetoxy)propyl (meth)acrylate, and combinations thereof. More preferred is acetoacetoxyethyl methacrylate

The emulsion polymer typically includes at least one copolymerized nonionic ethylenically unsaturated monomer not bearing carbonyl functionality such as, for example, a (meth)acrylic ester monomer including methyl (meth)acrylate, ethyl (meth)acrylate, butyl (meth)acrylate, 2-ethylhexyl (meth)acrylate, decyl (meth)acrylate, hydroxyethyl (meth)acrylate, hydroxypropyl (meth)acrylate, and ureido-functional (meth)acrylates; styrene or substituted styrenes; vinyl toluene;

butadiene; monoethylenically unsaturated acetophenone or benzophenone derivatives such as, for example are taught in US Patent No. 5,162,415; vinyl acetate or other vinyl esters; vinyl monomers such as vinyl chloride, vinylidene chloride, and N-vinyl pyrollidone. By "nonionic monomer" herein is meant that the copolymerized monomer residue does not bear an ionic charge between pH=1-14. The use of the term "(meth)" followed by another term such as (meth)acrylate, as used throughout the disclosure, refers to both acrylates and methacrylates. Preferred is an acrylic emulsion polymer by which is meant herein an emulsion polymer including, as copolymerized units, at least 40%, by weight based on polymer weight, of nonionic acrylic monomers such as for example esters derived from (meth)acrylic acid.

In certain embodiments the emulsion polymer includes from 0% to 6%, or in the alternative, from 0% to 3 wt% or from 0% to 1%, by weight based on the weight of the polymer, of a copolymerized multi-ethylenically unsaturated monomer. It is important to select the level of multi-ethylenically unsaturated monomer so as to not materially interfere with film formation and integrity. In certain embodiments the emulsion polymer is free from copolymerized multi-ethylenically unsaturated monomer. Multi-ethylenically unsaturated monomers include, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

The emulsion polymer includes from 0% to 15%, preferably from 1% to 7%, of a copolymerized monoethylenically-unsaturated acid monomer, based on the weight of the polymer. Acid monomers include carboxylic acid monomers such as, for example, (meth)acrylic acid, crotonic acid, itaconic acid, fumaric acid, maleic acid, monomethyl itaconate, monomethyl fumarate, monobutyl fumarate, maleic anhydride, 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth)acrylate, phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate. Acid monomers used to form the acrylic polymer may include acid functional macromonomers and polymerizable acid functional anionic surfactants. In certain embodiments the emulsion polymer may include from 0 to 2%; preferably from 0.5% to 2% by weight, based on the weight of the polymer, of a copolymerized amide-functional ethylenically unsaturated monomer, such as, for example, (meth)acrylamide. In certain embodiments the emulsion polymer may include from 0% to 15%; preferably from 0.5% to 7% by weight, based on the weight of the polymer, of a copolymerized hydroxy functional monomer such as, for example, hydroxyethyl (meth)acrylate and hydroxypropyl (meth)acrylate. Combinations of any, or all, of the group including acid, amide, and hydroxy functional monomers are contemplated. Typically the monomers used to form the emulsion polymer will include a total of from 0.5 to 15%; preferably 0.5 to 7% by weight, based on the weight of the emulsion polymer, monomers selected from the group of acid, amide, and hydroxy functional monomers, the level of amide functional monomer being limited to 2%.

The calculated glass transition temperature ("Tg") of the emulsion polymer is from -20 °C to 105 °C, preferably from -10 °C to 60 °C Tgs of the polymers are calculated herein by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

, wherein

>Tg(calc.) is the glass transition temperature calculated for the copolymer
>w(M1) is the weight fraction of monomer M1 in the copolymer
>w(M2) is the weight fraction of monomer M2 in the copolymer
>Tg(M1) is the glass transition temperature of the homopolymer of M1
>Tg(M2) is the glass transition temperature of the homopolymer of M2, all temperatures being in °K.

The glass transition temperature of homopolymers may be found, for example, in "Polymer Handbook", edited by J. Brandrup and E.H. Immergut, Interscience Publishers.

The aqueous emulsion polymer is formed by an addition polymerization emulsion polymerization process as is known in the art. Conventional surfactants may be used such as, for example, anionic and/or nonionic emulsifiers such as, for example, alkali metal or ammonium alkyl sulfates, alkyl sulfonic acids, fatty acids, and oxyethylated alkyl phenols. Polymerizable surfactants that include at least one ethylenically unsaturated carbon-carbon bond which can undergo free radical addition polymerization may be used. Examples of anionic polymerizable surfactants include MAXEMUL™ 6106, MAXEMUL™ 6112, MAXEMUL™ 5011, MAXEMUL™ 5010 (all available from Uniqema); polyoxyethylene alkylphenyl ether ammonium sulfates (available from Montello, Inc. as HITENOL BC-10™, HITENOL BC-1025™, HITENOL BC-20™, HITENOL BC-2020™, HITENOL BC-30™), and allylsulfosuccinate derivatives (such as TREM LT-40™ (available from Henkel)). The amount of surfactant used is usually 0.1% to 6% by weight, based on the weight of total monomer. Either thermal or redox initiation processes may be used. Conventional free radical initiators may be used such as, for example, hydrogen peroxide, t-butyl hydroperoxide, t-amyl hydroperoxide, ammonium and/or alkali persulfates, typically at a level of 0.01% to 3.0% by weight, based on the weight of total monomer. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example iron and copper, optionally further including complexing agents for the metal. Chain transfer agents such as mercaptans may be used to lower the molecular weight of the polymer. The monomer mixture may be added neat or as an emulsion in water. The monomer mixture may be added in a single addition or more additions or continuously over the reaction period using a uniform or varying composition. Additional ingredients such as, for example, free radical initiators, oxidants, reducing agents, chain transfer agents, neutralizers, surfactants, and dispersants may be added prior to, during, or subsequent to the monomer addition. Processes yielding polymodal particle size distributions such as those disclosed in US Patent Nos. 4,384,056 and 4,539,361, for example, may be employed.

The emulsion polymer may be formed in a multi-stage emulsion polymerization process. In the multi-stage emulsion polymerization process at least two stages different in composition are formed in sequential fashion. Preferred is a two-stage emulsion polymerization process in which the weight of the first stage polymer is from 10% to 90%, preferably from 30% to 70%, of the total weight of the first stage polymer and the second stage polymer, based on dry polymer weights. The polymerization techniques used to prepare aqueous multi-stage emulsion-polymers are well known in the art such as, for example, as disclosed in U.S. Patents No. 4,325,856; 4,654,397; and 4,814,373.

A multi-stage emulsion polymerization process usually results in the formation of at least two mutually incompatible polymer compositions, thereby resulting in the formation of at least two phases. The mutual incompatibility of two polymer compositions and the resultant multiphase structure of the polymer particles may be determined in various ways known in the art. The use of scanning electron microscopy using staining techniques to emphasize the difference between the phases, for example, is such a technique. Such particles are composed of two or more phases of various geometries such as, for example, core/shell or core/sheath particles, core/shell particles with shell phases incompletely encapsulating the core, core/shell particles with a multiplicity of cores, and interpenetrating network particles. Each of the stages of the multi-staged emulsion polymer may contain the same monomers, surfactants, initiation system, chain transfer agents, etc. as disclosed herein-above for the emulsion polymer. In the case of a multi-staged polymer particle the physical characteristics of the emulsion polymer such as for example, carbonyl-functional monomer content, acid monomer content, $T_g$, etc. for the purpose of this invention is to be calculated using the overall composition of the emulsion polymer without regard for the number of stages or phases therein. The emulsion polymer is also contemplated to be formed in two or more stages, the stages differing in molecular weight. Blending two different emulsion polymers is also contemplated.

The average particle diameter of the emulsion polymer particles is typically from 40 nanometers to 1000 nanometers, preferably from 40 nanometers to 300 nanometers. Particle sizes herein were those measured by dynamic light scattering on a Brookhaven BI-90 analyzer. Latex samples were diluted to the appropriate concentration with IN KCl (aq.)

The aqueous polymeric composition includes an autoxidizable material. An autoxidizable material is a material capable of providing a source of free radicals upon exposure to oxygen. "Autoxidizable material" herein is selected from drying oils, such as linseed oil, tung oil, dehydrated castor oil; drying oil fatty acids, such as linseed oil fatty acid; esters of drying oil fatty acids, such as the ethyl ester of linseed oil fatty acid sorbitol, and sorbitol esters, glycerol and glycerol esters, or esters of trimethylol propane; and alkoxylated derivatives thereof. The autoxidizable material herein excludes hybrids of drying oils, such as oils, fatty acid residues, oil derivatives, and the like combined chemically with or incorporated in condensation polymers other than polyesters such as, for example, polyurethanes and polyamides.

The autoxidizable material includes fatty acid residues, i.e., a fatty acid residue herein being a RC(C=O)O- grouping where R is a C8 to C28 hydrocarbon backbone containing at least one unsaturated bond. The autoxidizable material of this invention includes less than 10 weight%, alternatively less than 8 weight %, and alternatively less than 5 weight %, triunsaturated fatty acid residues based on the total weight of the fatty acid residues included in the autoxidizable material in the aqueous polymeric composition. The use of higher levels of the triunsaturated autoxidizable material is believed to lead to the development of yellow color in the dry coating films prepared from the aqueous polymeric composition of the present invention.

Without being bound by a particular theory, it is believed that upon exposure to air the autoxidizable material will generate a radical flux that will lead to self-cross linking and cross linking with the carbonyl-functional emulsion polymer. In order to facilitate the autoxidation process a drier or mixture thereof is included in the film-forming composition. This component may be any polyvalent metal containing complex or salt that catalyzes the oxidative curing of autoxidizable material. Examples are polyvalent metal salts containing cobalt, calcium, manganese, copper, zinc, iron, and zirconium as the cation. Simple salts such as the halides, nitrates, and sulfates may be used but in many cases an organic anion such as the acetate, naphthenate, or the acetoacetonate may be used for solubility or compatibility reasons. A commercial example of an appropriate drier is Additol™ VXW4940, manufactured by Cytec.

The amount of drier used is typically in the range of 0.01 to 1% metal content based on the weight of the aqueous polymeric composition. The autoxidation process will take place without drier but it is significantly slower at room temperature.

In the aqueous polymeric composition the autoxidizable substance is from 10% to 20%, of the total weight of the polymer and the autoxidizable material, both the polymer weight and the autoxidizable material weight being on a dry basis.

The aqueous polymeric composition and the aqueous coating composition are both free from copolymerized carbonyl-functional-monomer-reactive amine and hydrazine functional groups. It is believed that decreased yellowing of the coating is thereby achieved.

The aqueous coating composition is prepared by techniques which are well known in the coatings art. First, pigment(s) are well dispersed in an aqueous medium under high shear such as is afforded by a COWLES (R) mixer or predispersed colorant(s), or mixtures thereof are used. Then the aqueous polymeric composition is added under low shear stirring along with other coatings adjuvants as desired. The autoxidizable material may be combined with the aqueous emulsion polymer in the presence or absence of solvent or in an aqueous dispersion. Alternatively, the aqueous emulsion polymer and the autoxidizable material are added separately. The aqueous coating composition may contain, in addition to the emulsion polymer and pigment(s), film-forming or non-film-forming solution or emulsion polymers in an amount of 0% to 200% by weight of the emulsion polymer, and conventional coatings adjuvants such as, for example, extenders, emulsifiers, coalescing agents, plasticizers, antifreezes, curing agents, buffers, neutralizers, thickeners, rheology modifiers, humectants, wetting agents, biocides, plasticizers, antifoaming agents, UV absorbers, fluorescent brighteners, light or heat stabilizers, biocides, chelating agents, dispersants, colorants, waxes, and water-repellants. In certain embodiments a photosensitive compound such as, for example, benzophenone or a substituted acetophenone or benzophenone derivative as is taught in US Patent No. 5,162,415 may be added. In certain embodiments the aqueous coating composition of the invention has a VOC (volatile organic compound) level of 150 g/liter of coating or less, alternatively of 100 g/liter or less, or further alternatively of 50 g/liter or less.

Examples of suitable pigments and extenders include titanium dioxide such as anatase and rutile titanium dioxides; zinc oxide; antimony oxide; iron oxide; magnesium silicate; calcium carbonate; organic and inorganic colored pigments; aluminosilcates; silica; various clays such as kaolin and delaminated clay; and lead oxide. It is also contemplated that the aqueous coating composition may also contain opaque polymer particles, such as, for example, Ropaque™ Opaque Polymers (Rohm and Haas Co., Philadelphia PA).

The amounts of pigment and extender in the aqueous coating composition vary from a pigment volume concentration (PVC) of 0 to 85 and thereby encompass coatings otherwise described in the art, for example, as clear coatings, stains, flat coatings, satin coatings, semi-gloss coatings, gloss coatings, primers, textured coatings, and the like. The pigment volume concentration is calculated by the following formula:

$$\text{PVC (\%)} = \frac{\text{volume of pigment(s), + volume extender(s)} \times 100.}{\text{total dry volume of paint}}$$

Frequently a VOC is deliberately added to a paint or coating to improve the film properties of a coating or to aid in the application properties of the composition employed to prepare the coating. Examples are glycol ethers, organic esters, aromatic compounds, ethylene and propylene glycol, and aliphatic hydrocarbons. The inventive dispersions are particularly useful in the formation of aqueous coating compositions having less than 5% VOC, or less than 3% VOC, or less than 1.7% VOC, by weight based on the total weight of the aqueous coating composition. A volatile organic compound ("VOC") is defined herein as a carbon containing compound that has a boiling point below 250°C at atmospheric pressure, compounds such as water and ammonia being excluded from VOCs.

The solids content of the aqueous coating composition may be from 10% to 70% by volume. The viscosity of the aqueous coating composition may be from 50 centipoise to 50,000 centipoise, as measured using a Brookfield viscometer; viscosities appropriate for different application methods vary considerably.

The aqueous coating composition is typically applied to a substrate such as, for example, wood, metal, plastics, cementitious substrates such as, for example, concrete, stucco, and mortar, previously painted or primed surfaces, and weathered surfaces. The aqueous coating composition may be applied to a substrate using conventional coatings application methods such as, for example, curtain coater and spraying methods such as, for example, air-atomized spray, air-assisted spray, airless spray, high volume low pressure spray, and air-assisted airless spray.

The invention is a method for improving the repaintability of an aqueous coating during drying. The method includes forming the aqueous coating composition; applying the aqueous coating composition to a substrate; and then applying more of the aqueous coating composition to the previously applied aqueous coating composition during drying. Improving the repaintability of an aqueous coating during drying refers herein to the ability, relative to prior aqueous coatings, to blend in newly applied aqueous coating into previously applied but not completely dry aqueous coating for as long a period of time as possible resulting in a seamless or nearly seamless appearance in the resulting dry coating. This relates to overlapping areas of wet coating during the drying process. This ability, reflected in reflow/repaint test results, for example, is a highly desirable coating application property.

Drying of the aqueous coating composition to provide a coating may be allowed to proceed under ambient conditions such as, for example, at 5 °C to 35 °C. or the coating may be dried at elevated temperatures such as, for example, from 35 °C to 150 °C.

| Abbreviations used | Homopolymer Tg |
|---|---|
| Acetoacetoxyethyl methacrylate | AAEM |
| Butyl acrylate | BA |
| Ethylhexyl acrylate | EHA |
| Methyl methacrylate | MMA |
| Butyl Methacrylate | BMA |
| Methacrylic acid | MAA |
| tButyl hydroperoxide (70%) | tBHP |
| Isoascorbic acid | IAA |
| Ammonium persulfate | ALPS |
| n-Dodecanethiol | nDDM |
| deionized water | DI water |

## **Experimental Methods**

### Reflow/Repaint Test - X Test

Secured Leneta Chart (Form 12H, 1000cm2) to vertical surface. Using 1 ½ - 2" in wide paint brush, painted out design area of chart and recorded weight of paint. Immediately, using the tip of a wooden applicator stick or pipette, scored an X in each of the 4 quadrants of the chart (about 3 X 3" in size). Start timer. At the designated time intervals, each of the X scored areas were repainted. The paint brush, prior to the repaint process, was redipped in the paint to wet the brush but no or only a slight amount of new paint was applied to the repaint area. The test chart remained hung overnight to dry. The next day, the chart was visually evaluated for initial flow and leveling (single coat areas).

Flow/Leveling: 1 = very poor, 10= excellent (very smooth) Then the flow and leveling was rated visually in each of the four repainted areas. Each quadrant is examined for the persistence of the scored X mark and the longest time interval at which no vestige of the X is apparent is recorded.

### Large Substrate Reflow Test

### Or 4 chart application test method

This method gives a rating for flow and leveling and open time

    1) Taped 4 Leneta spread rate charts together with a total surface area= 0.4 m$^2$

    2) Taped chart assembly to a wall

    3) Brushed out all four charts by covering first the two left charts and finishing with the two right charts. Noted ease of spreading, brush drag

    4) Finished up by feathering horizontally then vertically with the brush

    5) Started the time watch

    6) After 4 minutes, re-brushed vertically the two right charts without re-dipping the brush into the paint. Again, noted any brush feeling

    7) Let the paint dry overnight

    8) Rated the flow and leveling from 1 to 10 (10= best) on each side of the chart assembly. The open time is the best when the re-brushed area flowed as well as the original area.

Konig Hardness:

Aqueous coating was drawn down at the designated film thickness using appropriate applicator over aluminum or glass panel and allowed to dry under constant temperature and humidity conditions (25°C, 50%RH). At 1, 7 14 days, the hardness was measured using a Byk Mallinckrodt Konig Pendulum Hardness Tester.

Gloss, Glass:

A drawdown of the test sample was prepared on an appropriately sized glass panel using a 4-5 mil Bird film applicator. The panel was allowed to dry in the CTR overnight. The 20° or 60° specular gloss was measured using a micro-TRI-gloss meter from BYK Gardner. Gloss was remeasured after 7 days of drying.

Gloss, Chart:

An aqueous coating composition was drawn down on 5C Leneta Chart using a 4-5 mil Bird applicator. The coating was allowed to dry overnight. The 20° or 60° specular gloss was measured using a micro-TRI-gloss meter from BYK Gardner. Gloss was remeasured after 7 days of drying.

Hot Peel Block Resistance:

1. Cast the paint to be tested on the chart using a 3 Mil Bird applicator. Conditioned panels in the CTR (25°C; 50% RH) for 7 days.
2. Cut out four 1-1/2" x 1-1/2" sections (to run duplicates) from white area of each conditioned panel.
3. Placed the cut sections with the paint surfaces face to face.
4. Placed two face to face specimens of each test sample in a 50°C (120°F) oven on a flat metal plate. Topped each individual specimen with a heated, solid, number 8 rubber stopper with narrow side down and place a heated 1000 g. weight on each stopper. The force calculated for this setup is 127 g/cm2 (1.8 psi).
5. After approximately 18 hours, removed the stoppers and weights and removed the test sections from the oven. Allowed the test specimens to cool 30 minutes at room temperature.
6. After cooling, separated the sections with slow and steady force. Pulled apart at an angle of approximately 180° and listened for tack. Rated the samples for block resistance on a scale of 0 to 10.

Room Temperature Block Resistance:

Repeated exactly as Hot Peel Block Resistance but ran test at 25°C/50%RH.

Block Reporting:

1. Block resistance was reported on a numerical scale of 0 to 10, which corresponds to a subjective tack and seal rating determined by the operator. This rating system is defined below in appropriate descriptive terms. All variations of the Peel Block Resistance Test rate samples on the following scale:

- 10, no tack, perfect
- 9, trace tack, excellent
- 8, slight tack, very good
- 7, slight tack, good
- 6, moderate tack, good
- 5, moderate tack, fair
- 4, severe tack, no seal, fair
- 3, 5-25% seal, poor
- 2, 25-50% seal, poor
- 1, 50-75% seal, poor
- 0, complete seal, very poor

BLOCK RESISTANCE TEST 2

Results are reported in N/cm2.

1) Using an automatic applicator, cast paint on spreading rate charts using a 100 micron bar.

2) Dried applications for 1 and 7 days at 23°C+/2, 50% R.H. +/- 5.

3) Using a two face adhesive tape, taped microscope slides on the back of the chart. Cut the glass slides with a cutter, six slides per paint (3 replicates).

4) Placed the paint surface face-to-face and the length of the slides at right angles to each other so that they formed a cross.

5) Placed glass assemblies in a press and applied two kg for two hours.

6) After two hours, placed a glass assembly in the dedicated slot of the Byk/Rohm and Haas block tester.

7) Chose a weight and placed it at the right end side of the tester lever.

8) Lowered the lever slowly on top of the glass assembly.

9) Ran the automated weight movement from right to left until the glass plates separated.

10) Noted the rating on the ruler.

11) Reported force in $N/Cm^2$ using a table (force v.s. weight, rating).

The lower the force the better the block resistance.

| Rating | Weight (g) | Force $(N/Cm^2)$ |
|---|---|---|
| 0 | | 0 |
| 100 | 1000 | 0.33 |
| 700 | 1500 | 2.14 |
| 1100 | 3500 | 5.42 |
| 1100 | 5000 | 7.02 |
| 1600 | 5000 | 9.97 |

Synthesis of Emulsion polymer a

Monomer Emulsion 1 - Surfactant A (10.4g) was dissolved in DI water (250.6g). An emulsified monomer mixture was prepared by adding the following monomers slowly to the agitated solution; BA (81g), BMA (340.8g), Styrene (283.4g), MAA (40.4g), AAEM (64.8g), n-DDM (16.2g).

Monomer Emulsion 2 - Surfactant A (10.4g) was dissolved in DI water (250.6g). Emulsified monomer mixture was prepared by adding the following monomers slowly to the agitated solution; BA (81.0g), BMA (340.8g), Styrene (283.4g), MAA (40.4g), AAEM (64.8g), n-DDM (2.1g).

A solution containing Surfactant B (60.3g) and DI water (1080g) was placed in a 4-necked, 5 liter round bottom flask reactor equipped with a thermocouple, a cooling condenser and an agitator, and heated to 85°C under nitrogen. Sodium carbonate (5.4g in 91.8g of water), APS (4.4g in 32.4g of water), and 10% of Monomer Emulsion 1 were added to the reactor. Within about 5 minutes, initiation of polymerization was confirmed by the increase of temperature by 3° C and change of the external appearance of the reaction mixture. After generation of heat had ended, the remainder of the Monomer Emulsion 1 and a co-feed of APS (0.9g in 108g of water) were added to the reactor over a period of 45minutes. Polymerization reaction temperature was maintained at 84-87° C. After completing the addition, the vessel that contained Monomer Emulsion 1 and the feeding pipes leading into the reactor were rinsed with 50g DI water, and the rinse was added back to the reactor. Upon completion of the rinse, Monomer Emulsion 2 was then added over 45 minutes. Polymerization reaction temperature was maintained at 84-86° C. After completing the addition, the vessel that contained the Monomer Emulsion 2 and the feeding pipes were rinsed with 250g DI water, and the rinse was added back to the reactor. Upon completion of the additions the reaction mixture was cooled to 60C before addition of iron sulfate (10.8g of a 0.015% solution in water). t-BHP(70%, 1.1g in 13g water) was added to the reactor followed by the gradual addition of IAA (0.54g in 18.4g water) over 30 minutes. Upon completion of the feeds, the reaction was cooled to room temperature and ammonia (29%, 37.8g) added to adjust the pH. The resulting polymer emulsion was characterized to contain 44.6% solids, pH = 8.5, 98nm particle size.

Synthesis of Emulsion polymer b

Emulsion polymer b has the same composition as emulsion polymer a and was prepared according to the same process. The resulting polymer emulsion was characterized to contain 47.1% solids, pH = 8, 106nm particle size.

Synthesis of Emulsion polymer c

Monomer Emulsion - Surfactant A (28.4g) was dissolved in DI water (230g). An emulsified monomer mixture was prepared by adding the following monomers slowly to the agitated solution; BA (323g), MMA (450.5g), MAA (12.8g), AAEM (63.8g.

A solution containing Surfactant A (2.8g) and DI water (821g) was placed in a reactor equipped with a thermocouple, a cooling condenser and an agitator, and heated to 80C under nitrogen. APS (3.8g in 35g of water), and 3.80% of Monomer Emulsion were added to the reactor. Within 5 minutes, initiation of polymerization was confirmed by the increase of temperature by 3° C and change of the external appearance of the reaction mixture. After generation of heat had ended, the remainder of the Monomer Emulsion was added to the reactor over a period of 90 minutes. Simultaneously a co-feed of APS (0.5g in 50g of water) was added to the reactor over a period of 135 minutes. Polymerization reaction temperature was maintained at 80-82° C. After completing the addition, the vessel that contained the Monomer Emulsion and the feeding pipes were rinsed with 40g DI water, and the rinse was added back to the reactor. Upon completion of the additions, the reaction mixture was held at 80°C for 60 minutes before cooling to 70°C. Iron sulfate (10g of a 0.015% solution in water) and Copper sulfate (1.2g of a 0.1% solution in water) were added to the reactor. t-BHP (70%, 0.7g in 3.5g water) and IAA (0.5g in 25g water) were added to the reactor and the mixture held at 70C for 30 minutes. After the hold period a solution of t-BHP (70%, 1.8g in 30g water) was added to the reactor, followed by the gradual addition of a second solution of IAA (1.3g in 30g water) over 30 minutes. Upon completion of the feeds, the reaction was cooled to room temperature and ammonia (29%, 14.5g) added to adjust the pH. The resulting polymer emulsion was characterized to contain 40% solids, pH = 8, 103nm particle size.

Synthesis of Emulsion polymer d

Monomer Emulsion - Surfactant A (67.5g) was dissolved in DI water (619g). An emulsified monomer mixture was prepared by adding the following monomers slowly to the agitated solution; BA (845.3g), styrene (1131.1g), MAA (30.4g), ureido methacrylate (40.5g), n-DDM (2g).

A solution containing Surfactant A (4.5g) and DI water (1421.6g) was placed in a reactor equipped with a thermocouple, a cooling condenser and an agitator, and heated to 85°C under nitrogen. APS (5.0g in 27g of water), and 3.0% of Monomer Emulsion were added to the reactor. Within about 5 minutes, initiation of polymerization was confirmed by the increase of temperature by 3°C and change of the external appearance of the reaction mixture. After generation of heat had ended, the remainder of the Monomer Emulsion and a co-feed of APS (3.0g in 100g of water) were added to the reactor over a period of 175 minutes. Polymerization reaction temperature was maintained at 84-86° C. After completing the addition, the vessel that contained the Monomer Emulsion and the feeding pipes were rinsed with 50g DI water, and the rinse was added back to the reactor.

Upon completion of the additions the reaction mixture was cooled to 80C before addition of iron sulfate (10g of a 0.015% solution in water). t-BHP (70%, 5.6g in 25g water) was added to the reactor followed by the gradual addition of IAA (4g in 100g water) over 30 minutes. The reaction mixture was held at 80°C for 15 minutes before cooling to 60°C. After the hold period a solution of t-BHP (70%, 2.8g in 15g water) was added to the reactor, followed by the gradual addition of a second solution of IAA (2.0g in 50g water) over 30 minutes. Upon completion of the feeds, the reaction was cooled to room temperature and ammonia (29%, 14.5g) added to adjust the pH. The resulting polymer emulsion was characterized to contain 44.3% solids, pH = 8.3, 151nm particle size.

Synthesis of emulsion polymer e

Monomer Emulsion 1 - Surfactant A (52g) was dissolved in DI water (1250g). Emulsified monomer mixture was prepared by adding the following monomers slowly to the agitated solution; BA (405g), BMA (1704g), Styrene (1417g), MAA (202g), AAEM (324g), n-DDM (81g).

Monomer Emulsion 2 - Surfactant A (52g) was dissolved in DI water (1250g). An emulsified monomer mixture was prepared by adding the following monomers slowly to the agitated solution; BA (405g), BMA (1704g), Styrene (1417g), MAA (202g), AAEM (324g), n-DDM (10.3g).

A solution containing Surfactant B (301.5g) and DI water (5400g) was placed in a 4-necked, 5 liter round bottom flask reactor equipped with a thermocouple, a cooling condenser and an agitator, and heated to 85°C under nitrogen. Sodium carbonate (27g in 459g of water), APS (22g in 162g of water), and 10% of Monomer Emulsion 1 were added to the reactor. Within about 5 minutes, initiation of polymerization was confirmed by the increase of temperature by 3° C and change of the external appearance of the reaction mixture. After generation of heat had ended, the remainder of the Monomer Emulsion 1 and a co-feed of APS (4.3g in 540g of water) were added to the reactor over a period of 45minutes. Polymerization reaction temperature was maintained at 84-87° C. After completing the addition, the vessel that contained Monomer Emulsion 1 and the feeding pipes leading into the reactor were rinsed with 50g DI water, and the rinse was added back to the reactor. Upon completion of the rinse, Monomer Emulsion 2 was then added over 45 minutes. Polymerization reaction temperature was maintained at 84-86° C. After completing the addition, the vessel that contained the Monomer Emulsion 2 and the feeding pipes were rinsed with 250g DI water, and the rinse was added back to the reactor. Upon completion of the additions the reaction mixture was cooled to 60C before addition of iron sulfate (54g of a 0.015% solution in water). t-BHP(70%, 5.4g in 65g water) was added to the reactor followed by the gradual addition of IAA (2.7g in 92g water) over 30 minutes. Upon completion of the feeds, the reaction was cooled to room temperature and ammonia (29%, 189g) added to adjust the pH. The resulting polymer emulsion was characterized to contain 44.8% solids, pH = 8.5, 98nm particle size.

Synthesis of emulsion polymer f

Monomer Emulsion - Surfactant A (73.2g) was dissolved in DI water (388g). Emulsified monomer mixture was prepared by adding the following monomers slowly to the agitated solution; EHA (397.7g), MMA (674.9g), MAA (42.2g), AAEM (90g), n-DDM (2.4g).
A solution containing Surfactant A (0.4g) and DI water (803.4g) was placed in an appropriate reactor equipped with a thermocouple, a cooling condenser and an agitator, and heated to 85°C under nitrogen. APS (3.2g in 32g of water), and 3.2% of Monomer Emulsion were added to the reactor. Within about 5 minutes, initiation of polymerization was confirmed by the increase of temperature by 3°C and change of the external appearance of the reaction mixture. After generation of heat had ended, the remainder of the Monomer Emulsion and a co-feed of APS (3.2g in 80g of water) were added to the reactor over a period of 90 minutes. Polymerization reaction temperature was maintained at 84-86° C. After completing the addition, the vessel that contained the Monomer Emulsion and the feeding pipes were rinsed with 25g DI water, and the rinse was added back to the reactor.
Upon completion of the additions the reaction mixture was cooled to 70°C before addition of iron sulfate (9.1g of a 0.015% solution in water), Versene™ (1.1g of a 1% solution in water). t-BHP (70%, 1.1g in 32g water) and IAA (0.8g in 32g water) were added to the reactor over 30 minutes. Upon completion of the feeds, the reaction was cooled to room temperature and ammonia (29%, 60.7g) added to adjust the pH, followed by addition of Proxel™ (6.8g of an 18% solution in water) was added. The resulting polymer emulsion was characterized to contain 43.2% solids, pH = 9.1, 125nm particle size.

Synthesis of emulsion polymer g

Monomer Emulsion - Surfactant A (90.7g) was dissolved in DI water (481.6g). An emulsified monomer mixture was prepared by adding the following monomers slowly to the agitated solution; EHA (493.1g), MMA (724.8g), MAA (52.3g), AAEM (224.2g), n-DDM (14.9g).
A solution containing Surfactant A (0.5g) and DI water (996.2g) was placed in an appropriate reactor equipped with a thermocouple, a cooling condenser and an agitator, and heated to 85C under nitrogen. APS (4g in 39.8g of water), and 3.2% of Monomer Emulsion were added to the reactor. Within about 5 minutes, initiation of polymerization was confirmed by the increase of temperature by 3°C and change of the external appearance of the reaction mixture. After generation of heat had ended, the remainder of the Monomer Emulsion and a co-feed of APS (4.0g in 100g of water) were added to the reactor over a period of 90 minutes. Polymerization reaction temperature was maintained at 84-86° C. After completing the addition, the vessel that contained the Monomer Emulsion and the feeding pipes were rinsed with 31g DI water, and the rinse was added back to the reactor.
Upon completion of the additions the reaction mixture was cooled to 70°C before addition of iron sulfate (11.3g of a 0.015% solution in water), Versene™ (1.41g of a 1% solution in water). t-BHP (70%, 1.4g in 39.8g water) and IAA (1.0g in 39.8g water) were added to the reactor over 30 minutes. Upon completion of the feeds, the reaction was cooled to room temperature and ammonia (29%, 75.3g) added to adjust the pH, followed by addition of Proxel™ (8.4g of an 18% solution in water) was added. The resulting polymer emulsion was characterized to contain 43.4% solids, pH = 8.4, 127nm particle size.

Synthesis of emulsion polymer h

Emulsion polymer h has the same composition as emulsion polymer a and was prepared according to the same process.
As used herein Surfactant A is a fatty alcohol polyglycol ether sulfate with an average level of ethoxylation equal to three EO units; Surfactant B is a polyoxyethylene tridecyl ether phosphate with an average level of ethoxylation equal to six EO units.

EXAMPLES 1-4 Preparation of aqueous coating compositions and evaluation of the compositions and coatings prepared therefrom. Compositions that contained alkyd emulsions were prepared as presented in Table 1.1. The evaluation of the compositions and coatings prepared therefrom are presented in Table 1.2.

Table 1.1

| Example | Comp.Ex.A | 1* | 2* | 3 | 4 |
|---|---|---|---|---|---|
| Emulsion polymer | c | c | c | c | c |
| Autoxidizable material | 0 | 15% WorleeSol™ E150W | 25% WorleeSol™ E150W | 15% Chempol™ 1364 | 25% Chempol™ 1364 |
| Grind: | | | | | |
| Water | 11.71 | 11.86 | 11.46 | -11.84 | 11.45 |
| Tamol™ 731A | 2.25 | 2.28 | 2.28 | 2.27 | 2.26 |
| BYK-019 | 0.57 | 0.57 | 0.57 | 0.57 | 0.57 |
| Surfynol™ CT-111 | 0.28 | 0.28 | 0.28 | 0.28 | 0.28 |
| Acrysol™ RM-5000 | 0.72 | 0.73 | 0.73 | 0.73 | 0.72 |
| Ammonia (29%) | 0.09 | 0.09 | 0.09 | 0.09 | 0.09 |
| Ti-Pure™ R-706 | 56.20 | 56.95 | 56.95 | 56.83 | 56.46 |
| Additol™ VXW 4940 | 1.03 | 1.04 | 1.45 | 1.04 | 1.45 |
| *Grind Sub-total* | 72.85 | 73.80 | 73.81 | 73.65 | 73.28 |
| **LetDown** | | | | | |
| Emulsion polymer | 182.61 | 153.86 | 135.75 | 154.08 | 136.22 |
| Worlee Sol™ E150W | | 27.15 | 45.25 | | |
| Chempol™ 821-1364 | | | | 27.67 | 46.22 |
| Ammonia (28%) | 0.55 | 0.31 | 0.70 | 0.50 | 0.70 |
| Texanol™ | 8.76 | 6.52 | 6.88 | 6.50 | 5.09 |
| Acrysol™ RM-5000 | 3.00 | 3.00 | 3.00 | 3.08 | 3.00 |
| BYK™-024 | 1.04 | 1.03 | 1.03 | 1.03 | 1.04 |
| | | | | | |
| | | | | | |
| **Add Grind** | 72.85 | 73.80 | 73.81 | 73.65 | 73.28 |
| pH | 8.3/8.9 | 8.1/8.8 | 8.3/9.0 | 8.3/8.8 | 8.24 |
| Ammonia (28%) | 0.59 | 0.49 | 0.52 | 0.43 | 0.94 |

(continued)

| Example | Comp.Ex.A | 1* | 2* | 3 | 4 |
|---|---|---|---|---|---|
| Emulsion polymer | c | c | c | c | c |
| Autoxidizable material | 0 | 15% WorleeSol™ E150W | 25% WorleeSol™ E150W | 15% Chempol™ 1364 | 25% Chempol™ 1364 |
| Water | 3.12 | 6.24 | 4.42 | 3.99 | 4.05 |
| Acrysol™ RM5000 | 2.48 | 2.6 | 3.64 | 4.07 | 4.88 |
| Acrysol™ RM-8W | 0.00 | | 0.00 | | 0.00 |
| Ammonia (28%), | | | | | |
| Actual Totals | 275.00 | 275.00 | 275.00 | 275.00 | 275.42 |
| * not of the invention | | | | | |

All aqueous coating compositions in the examples were prepared in the following manner:

Grind Procedure: Charged water, Tamol 731A, Byk019, CT111, and RM-5000 to grind pot. Using bench top dispersator, stirred for 2 min @ 500rpm. Added TiO2 gradually over 5 min. Increased agitation during this addition to maintain vortex (ended at 1800 rpm). Stirred for 5 minutes. Stopped stirring. Lowered grind pot and dislodged dry, coagulated, adhered TiO2 from stirring shaft and blades and dropped into grind pot. Restarted stirring. Maintained 1800 rpm for 25 min. After 25 minutes, removed sample for Hegman assessment. Some cooling was necessary for this batch of grind.
Results: On final Hegman analysis, no grit observed.

Paint Procedure:

Charged Let Down raw materials in order to paint container equipped with overhead stirrer. Then added the target weight of grind over ~ 5 minutes adjusting stirring to maintain vortex. After all grind was added, stirred for aditional 2-5 minutes. Added remaining ingredients. Measured pH and adjusted to 8.2-9.2 as necessary with ammonia.

Table 1.2

| Aqueous coating composition of Example | Comp.Ex.A | 1* | 2* | 3 | 4 |
|---|---|---|---|---|---|
| Emulsion polymer | c | c | c | c | c |
| Equilibrated pH | 8.7 | 8.6 | 8.6 | 8.6 | 8.7 |
| Equil. Brookfield (sp3,12rpm) | 8900 | 6530 | 8790 | 7230 | 5410 |
| Equil. ICI | 1.6 | 1.8 | 2.5 | 1.9 | 2.6 |
| Equil. KU | 122 | 129 | 127 | 130 | 117 |
| Reflow/Repaint Test: | | | | | |
| Add on, q. | 9.8 | 11.8 | 9.8 | 11.1 | 10.5 |
| initial rating | 6 | 6, | 7 | 6 | 8 |
| 3 min | 5 | 7 | 7 | 7, | 9 |
| 5 min | 5 | 7 | 8 | 7, | 8 |
| 10 min | 3 | 5 | 3 | 4 | 5 |
| 15 min | 3 | 2 | 1 | 3 | 4 |

(continued)

| Aqueous coating composition of Example | Comp.Ex.A | 1* | 2* | 3 | 4 |
|---|---|---|---|---|---|
| X mark not seen at (min) | <3 | <3 (almost imperceptible) | 3 | 5 | 5 |
| DD Glass Gloss (20 deg): | | | | | |
| 1day | 48 | 54 | 51 | 56 | 56 |
| 7day | 44 | 49 | 45 | 51 | 54 |
| | | | | | |
| Konig Hardness DD, 3mil sec | | | | | |
| 1 day | 47 | 53 | 19 | 56 | 67 |
| 2days | 64 | 67 | 21 | 58 | 71 |
| 7days | 76 | 95 | 29 | 87 | 100 |
| 14days | 84 | 99 | 37 | 100 | 115 |
| 30 days | 96 | 116 | 47 | 115 | 124 |
| 60 days | 107 | 119 | 51 | 123 | 135 |
| | | | | | |
| Peel Block Resistance | | | | | |
| 1 day dry, RT | 2/2 | 7,7 | 7/7 | 6,6 | 2/2 |
| 1 day dry, 50C | 0/0 | 0,0 | 0/0 | 0,0 | 0/0 |
| 7 day dry, RT | 8/8 | 8,8 | 9/9 | 8,8 | 9,8 |
| 7 day dry, 50*C | 1/1 | 1,0 | 0/0 | 0,0 | 9,8 |
| * not of the invention | | | | | |

Examples 3-4 of the invention exhibit application properties, particularly reflow/repaint ratings, superior to those of Comparative Example A that includes no autoxidizable material.

EXAMPLES 5-9 Evaluation of aqueous coating compositions and coatings including ethoxylated glyceryl linoleate autooxidizable material

Table 5.1 Evaluation of aqueous coating compositions and coatings

| Aqueous coating composition | Comp. Ex. B | Comp. Ex. C | Example 5 |
|---|---|---|---|
| Aqueous emulsion polymer | a | a | a |
| Ethoxylated glyceryl Linoleate (% on total binder) | 0% | 5% | 10% |
| Ethoxylation number | 0 | 20 | 20 |
| | | | |
| Equil. KU | 119 | 120 | 112 |
| Equil.Brookfield, 6 rpm/sp 3 | 10120 | 6440 | 3580 |
| Equil. ICI | 2 | 2.1 | 2.65 |
| | | | |
| Reflow/repaint test (10= best), brushed vertical | | | |
| Add on, g | 10.6 | 13.6 | 12.1 |
| initial rating | 4 | 7 | 9 |

(continued)

| Aqueous coating composition | Comp. Ex. B | Comp. Ex. C | Example 5 |
|---|---|---|---|
| rating 3 min | 5 | 9 | 10 |
| rating 5 min | 5 | 9 | 10 |
| rating 7 min | 5 | 8 | 10 |
| rating 10 min | 4 | 7 | 10 |
| X mark passes at (min) | sl seen at 3' | sl seen at 3' | 10' |
| 20°/60° brushed gloss 1 day | 39/75 | 66/90 | 72/88 |
| draw down 20°/60° Gloss (glass,100 microns) | | | |
| 1 day | 69/88 | 78/91 | 76/88 |
| 7 day | 72/89 | 77/91 | 69/83 |
| Konig hardness (glass,100 microns), sec | | | |
| 1 day | 31 | 30 | 18 |
| 7 day | 49 | 52 | 34 |
| 13 day | 59 | 62 | 42 |
| 30 day | 73 | 72 | 51 |
| | | | |
| RT Block Resistance E (N/cm2) | | | |
| 1 day dry | >10 | >10 | >10 |
| 7 day dry | 10 | 6.3 | 6.7 |

Example 5 of the invention exhibits application properties, particularly repaint ratings, superior to those of Comparative Examples B and C that include 0% and 5% autoxidizable material.

Table 5.2 Evaluation of aqueous coating compositions and coatings

| Aqueous coating composition | Example 6 | Example 7 | Example 8 | Example 9 |
|---|---|---|---|---|
| Aqueous emulsion polymer | f | f | f | f |
| Ethoxylated glyceryl Linoleate (% on total binder) | 10 | 15 | 10 | 15 |
| Ethoxylation number | 20 | 20 | 15 | 15 |
| | | | | |
| Equil. KU | 102 | 102 | 102 | 104 |
| Equil. Brookfield, 6 rpm/sp 3 | 2780 | 2500 | 2820 | 2680 |
| Equil. ICI | 3 | 2.9 | 3 | 3 |
| | | | | |
| Draw down 20°/60 micr ° Gloss (glass,100 ons) | | | | |
| 1day | 72/86 | 75/85 | 75/87 | 74/85 |
| 7day | 70/83 | 72/88 | 73/85 | 73/82 |
| | | | | |
| Konig hardness (gla ss, 100 microns), sec | | | | |
| 1 day | 19 | 11 | 16 | 10 |
| 7 days | 34 | 22 | 26 | 20 |

(continued)

| Aqueous coating composition | Example 6 | Example 7 | Example 8 | Example 9 |
|---|---|---|---|---|
| | | | | |
| RT Block Resistance 2 (N/cm2) | | | | |
| 1 day dry | >10 | >10 | >10 | >10 |
| 7 day dry | 10 | >10 | 9.4 | >10 |
| | | | | |
| Large substrate ref best), brus low test ratings (10= hed vertical | | | | |
| add on, g | 45 | 46.3 | 39.4 | 41 |
| initial rating | 8 | 9 | 8 | 8 |
| rework rating 4 min to half of the surface | 7 | 8 | 6 | limit of drying 7 |

Examples 6-9 including 10-15% autoxidizable material exhibit a desirable level of application properties.

EXAMPLES 10-11. Evaluation of aqueous coating compositions and coatings including glyceryl linoleate autoxidizable material.

Table 17.1

| Example | Comp.Ex. D | 10 | Comp.Ex.E | 11 |
|---|---|---|---|---|
| Emulsion Polymer | h | h | i | i |
| Autoxidizable material | 0 | 10% Glyceryl Linoleate (emulsified) | 0 | 10% Glyceryl Linoleate (emulsified) |
| | | | | |
| Equil. KU | 133 | NA | 115 | 108 |
| Equil. Brookfield, 6 rpm/sp 3 | 15980 | 24900 (sp4) | 5320 | 5540 |
| Equil. ICI | 2.5 | 3.2 | 2.6 | 2.0 |
| PH (initial) | 9.0 | 8.9 | 8.4 | 8.2 |
| | | | | |
| Reflow/repaint ratings (10= best), brushed vertical | | | | |
| add on, g. | 14.2 | 14.0 | 12.4 | 10.5 |
| initial rating | 6 | 8 | 8 | 9 |
| rating 3 min | 6 | 8 | 8 | 10 |
| rating 5 min | 6 | 8 | 8 | 10 |
| rating 10 min | 6 | 7 | 9 | 9 |
| rating 15 min | 5 | 7 | 7 | 8 |
| X mark passes at (min) | 0',3' | 0'-3' | 5'-10' | 5' |
| | | | | |
| 20°/60° brushed gloss 1 day | 46,6/78,6 | 46,0/82,3 | 42,7/74,5 | 53,0/84,7 |
| Glyceryl linoleate from Novance | | | | |

Examples 10-11 of the invention exhibit application properties, particularly repaint ratings, superior to those of Comparative Examples D and E that include no autoxidizable material

**Claims**

1. A method for improving the repaintability of an aqueous coating during drying comprising:

   (a) forming an aqueous coating composition comprising a pigment and an aqueous polymeric composition, wherein said aqueous polymeric composition comprises:

   an emulsion polymer comprising, as copolymerized units, from 5% to 20%, by weight based on the weight of said polymer, carbonyl-functional ethylenically-unsaturated monomer, and
   an autoxidizable material selected from the group consisting of drying oils; drying oil fatty acids; esters of drying oil fatty acids; and alkoxylated derivatives thereof, and having less than 10%, by weight based on the weight of fatty acid residues therein, tri-unsaturated fatty acid residues;
   wherein said autoxidizable material is from 10% to 20% of the total weight of said polymer and said autoxidizable material; and

   wherein said coating composition is free from copolymerized carbonyl-functional-monomer-reactive amine and hydrazine functional groups;
   (b) applying said aqueous coating composition to a substrate; and
   (c) applying additional said aqueous coating composition to said applied aqueous coating composition during drying.

**Patentansprüche**

1. Ein Verfahren zum Verbessern der erneuten Anstreichbarkeit einer wässrigen Beschichtung während des Trocknens, das Folgendes beinhaltet:

   (a) Bilden einer wässrigen Beschichtungszusammensetzung, die ein Pigment und eine wässrige polymere Zusammensetzung beinhaltet, wobei die wässrige polymere Zusammensetzung Folgendes beinhaltet:

   ein Emulsionspolymer, das, als copolymerisierte Einheiten, bezogen auf das Gewicht des Polymers, von 5 Gew.-% bis 20 Gew.-%,
   carbonylfunktionelles ethylenisch ungesättigtes Monomer beinhaltet, und ein autoxidierbares Material, das aus der Gruppe ausgewählt ist, die aus trocknenden Ölen; Fettsäuren trocknender Öle; Estern von Fettsäuren trocknender Öle; und alkoxylierten Derivaten davon besteht, und, bezogen auf das Gewicht der Fettsäurerückstände darin, weniger als 10 % triungesättigte Fettsäurerückstände aufweist;
   wobei das autoxidierbare Material von 10 Gew.-% bis 20 Gew.-% des Gesamtgewichts des Polymers und des autoxidierbarn Materials ausmacht; und
   wobei die Beschichtungszusammensetzung frei von funktionellen copolymerisierten carbonylfunktionellen monomerreaktiven Amin- und Hydrazingruppen ist;

   (b) Aufbringen der wässrigen Beschichtungszusammensetzung auf ein Substrat; und
   (c) zusätzliches Aufbringen der wässrigen Beschichtungszusammensetzung auf die aufgebrachte wässrige Beschichtungszusammensetzung während des Trocknens.

**Revendications**

1. Une méthode pour l'amélioration de la re-peignabilité d'un revêtement aqueux durant le séchage comprenant :

   (a) la formation d'une composition de revêtement aqueuse comprenant un pigment et une composition polymérique aqueuse, ladite composition polymérique aqueuse comprenant :

   un polymère en émulsion comprenant, sous la forme d'unités de copolymérisation, de 5 % à 20 %, en poids rapporté au poids dudit polymère, de monomère éthyléniquement insaturé à fonction carbonyle, et une matière auto-oxydable sélectionnée dans le groupe consistant en des huiles siccatives ; des acides gras d'huiles siccatives ; des esters d'acides gras d'huiles siccatives ; et des dérivés alcoxylés de ceux-ci, et ayant moins de 10 %, en poids rapporté au poids des résidus d'acides gras qui y sont contenus, de résidus d'acides gras tri-insaturés ;

ladite matière auto-oxydable représentant de 10 % à 20 % du poids total dudit polymère et de ladite matière auto-oxydable ; et

ladite composition de revêtement étant dépourvue de groupes fonctionnels hydrazine et amine réactifs aux monomères à fonction carbonyle copolymérisés ;

(b) l'application de ladite composition de revêtement aqueuse sur un substrat ; et

(c) l'application, durant le séchage, de plus de ladite composition de revêtement aqueuse sur ladite composition de revêtement aqueuse appliquée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03051990 A
- US 5484849 A
- EP 599478 A
- US 5162415 A
- US 4384056 A
- US 4539361 A
- US 4325856 A
- US 4654397 A
- US 4814373 A

**Non-patent literature cited in the description**

- **T.G. FOX.** *Bull. Am. Physics Soc.,* 1956, vol. 1 (3), 123
- Polymer Handbook. Interscience Publishers